# FASCICULE DE BREVET EUROPEEN

(11) **EP 3 569 854 B1**
(45) Date de publication et mention de la délivrance du brevet: **14.09.2022**
(21) Numéro de dépôt: 19174020.8
(22) Date de dépôt: 13.05.2019
(51) Int. Cl.: F02K 3/06, F02C 7/36

(54) **ARCHITECTURE DE TURBOMACHINE A TRIPLE COMPRESSEUR**
AUFBAU EINES TURBOTRIEBWERKS MIT DREIFACH-KOMPRESSOR
TURBOMACHINE ARCHITECTURE WITH TRIPLE COMPRESSOR

(30) Priorité: 15.05.2018 BE 201805315
(43) Date de publication de la demande: 20.11.2019
(73) Titulaire: Safran Aero Boosters SA, 4041 Herstal (BE)
(72) Inventeur: CRACCO, Cédric, 4041 Herstal (BE); PRINCIVALLE, Rémy, 4041 Herstal (BE)
(74) Mandataire: Lecomte & Partners

(56) Documents cités:
- EP-A1- 3 006 713
- EP-A1- 3 112 649
- EP-A2- 3 067 541

## Description

### Domaine technique

L'invention concerne la conception d'une turbomachine avec trois compresseurs et un réducteur. L'invention a également trait à une turbomachine axiale, notamment un turboréacteur d'avion ou un turbopropulseur d'aéronef. L'invention a également pour objet un procédé de compression d'un flux primaire dans une turbomachine.

### Technique antérieure

Adapter les compresseurs basse-pression et haute-pression d'un turboréacteur nécessite d'effectuer des compromis structurels pénalisant le rendement et le taux de compression. Dans certaines situations, des contraintes de conception pourraient imposer de réaliser un compresseur dont le nombre de d'étages de compression ne serait pas un nombre entier. Afin de s'adapter à une telle contrainte, il pourrait devenir nécessaire de scinder un redresseur, ce qui signifie rajouter une rangée annulaire d'aubes statoriques. Or, la division d'une telle rangée ne permet pas d'en exploiter pleinement le potentiel dans le processus de compression. Ainsi, certains turboréacteurs optent pour une architecture à trois compresseurs.

Le document US 2014/0250860 A1 divulgue une turbomachine équipée d'une soufflante suivie d'une zone de compression du flux primaire. La zone de compression comporte trois compresseurs successifs, dont un compresseur basse-pression, un compresseur intermédiaire, et un compresseur haute-pression.

En raison de la présence de la soufflante, le gradient de pression totale en entrée du compresseur basse-pression est dégradé suivant la hauteur radiale du flux primaire. Cette dégradation s'observe au-delà des couches limites de la veine annulaire, par exemple sur 10% en extérieur et sur 30% en intérieur. Lorsque la soufflante comporte des pales composites, des plaques sont généralement intercalées en pied. Les jeux entre ces plaques sont traversés par des fuites qui s'additionnent aux tourbillons générés par les bords de fuite arrondis des pales composites. Les conditions d'accentuation du gradient de pression deviennent encore plus propices.

Aussi, un turboréacteur fonctionne différemment lorsqu'il reste au sol par rapport à un vol de croisière à plus de 8km d'altitude. Par exemple le déficit du gradient de pression totale en pied d'aube par rapport à la tête augmente en vol. Ce même déficit augmente avec une accélération de la soufflante, indépendamment de l'altitude.

D'autres exemples de turbomachines sont connus des documents EP 3 006 713A1 ou EP 3 112 649 A1.

### Résumé de l'invention

### Problème technique

L'invention a pour objectif de résoudre au moins un des problèmes posés par l'art antérieur. Plus précisément, l'invention a pour objectif d'homogénéiser un gradient de pression totale sur la hauteur radiale d'une veine primaire. L'invention a également pour objectif de proposer une solution simple, résistante, légère, économique, fiable, facile à produire, commode d'entretien et d'inspection aisée.

### Solution technique

L'invention a pour objet une turbomachine axiale, tel un turboréacteur d'aéronef, la turbomachine comprenant une soufflante, et une veine primaire traversant : un compresseur amont avec un rotor amont et des aubes statoriques, un compresseur aval avec un rotor aval et des aubes statoriques, et un compresseur central avec un rotor central disposé entre le rotor amont et le rotor aval et avec des aubes statoriques ; remarquable en ce qu'elle comprend en outre un réducteur couplé au rotor amont et au rotor central de manière à réduire la vitesse de rotation du rotor amont par rapport à la vitesse de rotation du rotor central, le rotor amont étant solidaire de la soufflante, et la turbomachine comprenant un bec de séparation annulaire qui est axialement disposé entre la soufflante et le compresseur amont, le compresseur amont comprenant des jeux axiaux entre les aubes du rotor amont et les aubes statoriques du compresseur amont, ces jeux axiaux étant supérieurs aux jeux axiaux du compresseur central entre les aubes du rotor central et les aubes statoriques du compresseur central.

Selon des modes avantageux de l'invention, la turbomachine peut comprendre une ou plusieurs des caractéristiques suivantes, prises isolément ou selon toutes les combinaisons techniques couvertes par les revendications:
- Le rotor amont comprend une seule rangée annulaire d'aubes rotoriques, un redresseur amont formé des aubes statoriques en amont de ladite rangée annulaire d'aubes, et éventuellement un redresseur aval en aval de ladite rangée annulaire.
- Le rotor central comprend au plus deux rangées annulaires d'aubes rotoriques, et au plus deux redresseurs, préférentiellement au plus trois redresseurs.
- La turbomachine axiale comprend un carter amont reliant le compresseur amont au compresseur central, le carter amont étant traversé par la veine primaire.
- Le carter amont comprend une rangée annulaire de bras de support, une rangée annulaire d'aubes axialement en regard du rotor amont, et éventuellement à distance axialement du rotor central.
- La turbomachine axiale comprend un carter aval reliant le compresseur central au compresseur aval, le carter amont étant traversé par la veine primaire.
- Le carter aval comprend une rangée annulaire de bras de support, une rangée annulaire d'aubes axialement en regard du rotor amont, et éventuellement à distance axialement du rotor aval.
- Le compresseur central comprend une rangée annulaire d'aubes à calage variable, éventuellement au plus une rangée annulaire d'aubes à calage variable.
- Au moins un ou chaque compresseur comprend une entrée annulaire avec une rangée annulaire d'aubes statoriques d'entrée, et une sortie avec une rangée annulaire d'aubes statoriques de sortie entre lesquelles sont disposées les aubes du rotor correspondant.
- Le compresseur amont et/ou le compresseur central comprend une rangée annulaire d'aubes statoriques en amont de chaque rangée annulaire d'aubes rotoriques du compresseur correspondant.
- Le réducteur comporte un planétaire interne solidaire du rotor central, et/ou un planétaire externe solidaire du rotor amont.
- axialement au niveau du compresseur central, la veine primaire présente un rayon minimal compris entre le rayon minimal au niveau du compresseur amont et le rayon minimal au niveau du compresseur aval.
- La turbomachine comprend une zone de détente constituée d'une turbine basse-pression et d'une turbine haute-pression.
- La turbomachine comprend une turbine basse-pression et un arbre basse-pression entraîné par la turbine basse-pression, ledit arbre basse-pression étant solidaire du rotor central et de la réduction, et/ou une turbine haute-pression et un arbre haute-pression couplé à la turbine haute-pression et au rotor aval.
- Le réducteur comprend un arbre d'entrée solidaire du rotor central, et un arbre de sortie solidaire du rotor amont.
- La rangée annulaire d'aubes du carter aval est disposée en moitié amont dudit carter aval, éventuellement en extrémité amont dudit carter aval.
- La rangée annulaire d'aubes du carter amont est disposée en moitié amont dudit carter amont, éventuellement en extrémité amont dudit carter amont.
- Le réducteur est configuré de manière à ce que le rotor amont et le rotor central présentent des sens de rotation opposés.
- Le compresseur amont comprend un bec de séparation formant l'entrée annulaire de la veine primaire.
- Le réducteur comporte un porte-satellite solidaire du stator de la turbomachine ou du rotor amont.
- Le réducteur comprend un rapport de réduction compris entre 1,50 et 2,50.
- Le rotor amont et la soufflante sont entraînés en rotation par le rotor central via le réducteur.
- La veine primaire est à distance axialement de la soufflante.
- Les compresseurs sont distants axialement les uns des autres, et notamment séparés et distincts, et/ou distants axialement de la soufflante.
- Les rotors des compresseurs tournent à des vitesses de rotation différentes.
- Les bras de la ou de chaque rangée de bras traversent radialement la veine primaire.
- Chaque compresseur inclut un redresseur en aval d'une rangée annulaire d'aubes rotoriques.
- Chaque redresseur et/ou chaque rangée annulaire d'aubes statoriques ralentit le flux primaire.

L'invention a également pour objet un turboréacteur d'aéronef, notamment apte à ingérer un volatile, le turboréacteur comprenant une turbomachine, remarquable en ce que la turbomachine est conforme à l'invention, préférentiellement le turboréacteur comprend une veine secondaire radialement à distance du compresseur central.

L'invention a également pour objet un procédé de compression d'un flux primaire dans une turbomachine avec une soufflante ; le procédé comprenant les étapes suivantes : (a) première compression du flux axial par un compresseur amont avec un rotor amont, puis (b) deuxième compression du flux primaire par un compresseur central avec un rotor central, puis(c) troisième compression du flux primaire par un compresseur aval avec un rotor aval, remarquable en ce que le procédé comprend en outre une étape (α) entrainement en rotation du rotor amont par le rotor central via un réducteur, la turbomachine étant notamment conforme à l'invention.

Selon des modes avantageux de l'invention, le procédé peut comprendre une ou plusieurs des caractéristiques suivantes, prises isolément ou selon toutes les combinaisons techniques couvertes par les revendications:
- Lors de l'étape (α) entrainement, le flux primaire exerce sur le rotor amont et/ou la soufflante un premier couple résistant, et un deuxième couple résistant sur le rotor central qui est inférieur ou supérieur au premier couple résistant.
- Lors de l'étape (α) entrainement, la vitesse de rotation de la soufflante et/ou du rotor amont est inférieure à la vitesse de rotation du rotor central et du rotor aval.
- Lors de l'étape (α) entrainement, le rotor central communique un couple au rotor amont.
- Le procédé comprenant en outre une étape (β) accélération d'un flux entrant dans la turbomachine qui se partage entre le flux primaire et le flux secondaire.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques couvertes par les revendications, à moins que le contraire ne soit explicitement mentionné.

### Avantages apportés

L'invention parvient à homogénéiser le gradient de pression totale sur la hauteur radiale de la veine annulaire. Lorsqu'en entrée le flux primaire présente un gradient de pression élevé en tête d'aube, le compresseur amont et le compresseur central parviennent à corriger ce gradient, et à réduire progressivement le déficit.

En sortie du compresseur central, le gradient de pression totale peut devenir homogène, et même s'inverser au besoin. Ainsi le gradient de pression totale augmente en pied, ce qui permet de s'adapter à l'effet centrifuge et à l'aspect convergeant de la veine traversant le carter aval. Par ce biais, le flux entrant dans le compresseur aval présente un gradient homogène optimal.

L'invention permet de préserver le compresseur central, et dans une plus grande mesure le compresseur aval. En effet, les jeux axiaux séparant les plateformes rotoriques des viroles internes peuvent être raccourcis malgré les risques d'ingestion. En corolaire, les aubes présentes entre ces jeux peuvent être allongées, ce qui améliore leur action dans le processus de compression. En sus, les aubes du compresseur central peuvent être amincies car les exigences de tenue aux chocs deviennent moins drastiques. Ainsi, leurs formes respectent davantage les géométries définies grâce aux exigences aérodynamiques.

L'invention homogénéise la compression au travers des compresseurs successifs. En effet l'ensemble de leurs étages de compression sont mieux partagés, et leurs vitesses de rotation varient de manière plus progressive. Ainsi, la plage de fonctionnement de la turbomachine s'étend.

Le compresseur amont permet de préparer le flux primaire après avoir traversé la soufflante. Même avec un seul étage de compression, il corrige le flux primaire et le prépare afin d'être reçu dans de meilleures conditions par le compresseur central.

### Brève description des dessins

La figure 1 représente une turbomachine axiale selon un premier mode de réalisation l'invention.
La figure 2 représente une partie de turbomachine axiale selon un deuxième mode de réalisation l'invention.
La figure 3 représente une partie de turbomachine axiale selon un troisième mode de réalisation l'invention.
La figure 4 représente un diagramme du procédé de compression d'un flux annulaire selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation, et notamment rigidement lié. La pression totale comprend la pression statique et la pression dynamique.

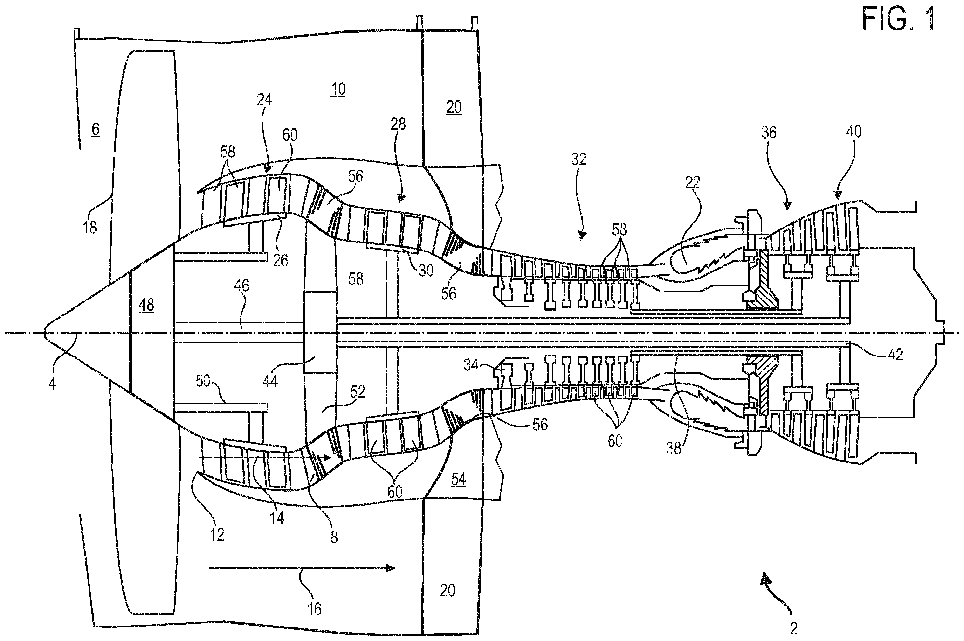

La figure 1 représente de manière simplifiée une turbomachine axiale. Il s'agit dans ce cas précis d'un turboréacteur 2 double-flux.

La turbomachine 2 présente un axe de rotation 4 pouvant également former un axe de symétrie axiale. La turbomachine 2 présente une entrée annulaire 6 se divisant en une veine primaire 8 et en une veine secondaire 10 grâce à un bec de séparation 12 de forme circulaire. Ces veines 8 et 10 sont empruntées par, respectivement, un flux primaire 14 et un flux secondaire 16, qui se rejoignent en sortie de la turbomachine. Les flux primaire 14 et secondaire 16 sont des flux annulaires coaxiaux et emmanchés l'un dans l'autre.

Le flux secondaire 16 est accéléré par une soufflante 18, notamment disposée en entrée 6, si bien qu'une réaction de poussée peut être générée. Celle-ci peut être employée pour le vol d'un aéronef. Des pales de diffuseur 20 peuvent être disposées dans la veine secondaire 10 et être configurées afin d'augmenter la composante axiale de la vitesse du flux secondaire. La soufflante peut être disposée en amont de la veine primaire 8 et de la veine secondaire 10, notamment à distance axialement de ces veines.

Alternativement, la soufflante peut être du type non carénée, par exemple à double rotor contrarotatifs. Elle peut être placée autour de la veine primaire.

La turbomachine 2 comprend une zone de compression, une chambre de combustion 22 et une zone de détente du flux primaire 14. La zone de compression est formée par trois compresseurs, dont d'amont en aval, un compresseur amont 24 avec un rotor amont 26, un compresseur central 28 avec un rotor central 30, et un compresseur aval 32, avec un rotor aval 34. Le compresseur aval 32, également appelé compresseur haute-pression, peut être placé en entrée de la chambre de combustion 22.

En aval de la chambre de combustion 22, la turbomachine 2 peut présenter une turbine haute-pression 36 couplée à un arbre haute-pression 38, puis une turbine basse-pression 40 couplée à un arbre basse-pression 42. Ce dernier peut être libre en rotation par rapport à l'arbre haute-pression 38. Ces turbines (36 ; 40) peuvent former la zone de détente du flux primaire 14. Les rotors peuvent être fixés aux arbres respectifs via des flasques ou des disques.

En fonctionnement, la puissance mécanique reçue des turbines (30 ; 32) est transmise via les arbres (38; 42) de façon à mettre en mouvement les compresseurs (24 ; 28 ; 32). Ces derniers comportent plusieurs rangées d'aubes de rotor associées à des rangées d'aubes de stator. La rotation des rotors (26 ; 30 ; 34) autour de son axe de rotation 4 permet ainsi de générer un débit d'air et de comprimer progressivement ce dernier jusqu'à l'entrée de la chambre de combustion 22.

La turbomachine 2 peut comprendre des moyens de démultiplication, tel un réducteur 44. Le réducteur 44 peut comprendre un train épicycloïdal. Le réducteur 44 peut être en prise avec le rotor amont 26 et avec le rotor central 30, lequel est notamment solidaire de l'arbre basse-pression 42 qui forme l'arbre d'entrée du réducteur 44. Sa sortie, éventuellement formée par un arbre de sortie 46, est solidaire du rotor amont 26, et facultativement de la soufflante 18 dont le disque 48 est rigidement lié au tambour 50 du rotor amont 26. Le réducteur 44 peut être configuré de manière à réduire la vitesse de rotation du rotor aval 26 et notamment de la soufflante 18, par rapport au rotor central 30 ; et donc à la turbine basse-pression 40. Ainsi, deux turbines suffisent pour entraîner les compresseurs selon trois vitesses de rotation spécifiques.

Le stator de la turbomachine 2 peut comprendre plusieurs carters support, dont un carter amont 52 et un carter aval 54 disposés de part et d'autres du compresseur central 28, également appelé carter intermédiaire. Ces carters peuvent comprendre des manches annulaires formant des tronçons axiaux de la veine primaire 8. Ils peuvent présenter des bras de carter 56 traversant radialement la veine 8. Les manches annulaires peuvent présenter des profils en col de cygne. Elles peuvent marquer des réductions de diamètre de la veine primaire 8, tout comme sa convergence progressive. Ainsi, le diamètre interne et/ou moyen de la veine primaire 8 peut être maximal dans le compresseur amont 24 ; et minimal dans le compresseur aval 32, et présenter des valeurs intermédiaires dans le compresseur central 28.

Le carter amont 52 peut supporter le compresseur amont 24, également appelé compresseur lent, et le bec de séparation 12. Il peut également supporter un palier principal articulant la soufflante 18. Une partie du réducteur peut y être ancrée. Le carter aval 54 peut être un carter intermédiaire, notamment intercalé entre le compresseur central 28 et le compresseur aval 32. Il peut recevoir un palier sur lequel est monté l'arbre basse-pression 38.

Chaque compresseur (24 ; 28 ; 32) peut comporter une alternance de rangées annulaires d'aubes statoriques 58 et de rangées annulaires d'aubes rotoriques 60, ces dernières étant solidaires de rotors (26 ; 30 ; 34). Par exemple, le compresseur amont 24 peut présenter trois rangées d'aubes statoriques 58 formant trois redresseurs entre lesquels sont intercalées deux rangées annulaires d'aubes rotoriques 60. La rangée d'aubes statoriques 58 en sortie du compresseur amont est optionnelle, notamment parce qu'elle peut être implantée sur le carter la suivant. Le compresseur central 28 peut présenter le même agencement d'aubes (58 ; 60).

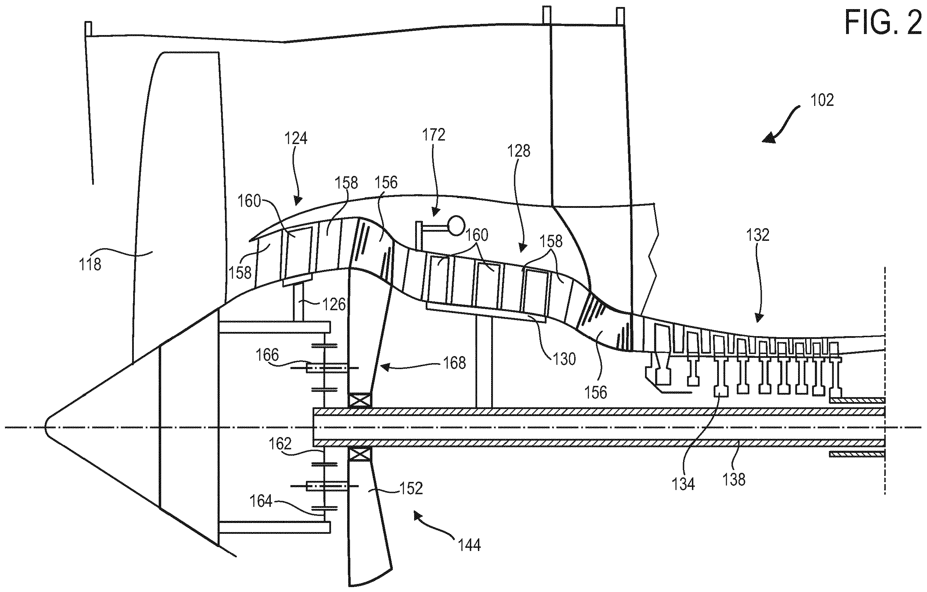

La figure 2 représente une turbomachine 102 selon un deuxième mode de réalisation de l'invention. Cette figure 2 reprend la numérotation de la figure précédente pour les éléments identiques ou similaires, la numération étant toutefois incrémentée de 100. Des numéros spécifiques sont utilisés pour les éléments spécifiques à ce mode de réalisation.

La turbomachine 102 selon le deuxième mode de réalisation est sensiblement identique au premier mode de réalisation, elle en diffère toutefois via les nombres de rangées d'aubes (158 ; 160) par compresseur (124 ; 128 ; 132). Par exemple, le compresseur amont 124 peut comprendre un rotor amont 126 avec une unique rangée annulaire d'aubes rotoriques 160. Celle-ci peut être disposée en aval d'une rangée annulaire d'aubes statoriques 158, et éventuellement en amont d'une optionnelle rangée annulaire d'aubes statoriques 158. Cette rangée peut être supprimée, ou intégrée dans le carter amont 152, par exemple entre les bras de carter 156, ou en amont de ces bras de carter 156. Ainsi, le compresseur amont 124 peut comprendre un unique étage de compression, notamment en regard de la soufflante 118.

A titre illustratif, le compresseur central 128 peut présenter un rotor central 130 à trois rangées annulaires d'aubes rotoriques 160, et à quatre rangées annulaires d'aubes statoriques 158. A nouveau la rangée aval reste optionnelle. Un des compresseurs, ou chaque compresseur, peut comprendre un système de calage variable 172 d'une, ou de plusieurs, ou de chaque rangée d'aubes statoriques 158. Un tel système 172 peut comprendre des tourillons sur les aubes, des leviers d'actionnement et une ou plusieurs bagues de commande également appelées bagues de synchronisation. Un tel système 172 permet de pivoter les aubes 158 sur elles-mêmes de manière à régler l'angle de redressement qu'elles apportent au flux primaire.

Le compresseur aval 132 peut présenter un rotor aval 134 à neuf rangées annulaires d'aubes rotoriques 160, et à huit rangées annulaires d'aubes statoriques 158.

Selon l'invention, le compresseur amont du premier mode de réalisation peut remplacer celui du deuxième mode de réalisation. Le même remplacement est permis concernant le compresseur central.

Le réducteur 144 peut être du type épicycloïdal. Il peut comprendre un planétaire interne 162 sur l'arbre basse-pression 138 qui traverse éventuellement le carter amont 152. Le réducteur peut comprendre un planétaire externe 164 solidaire du rotor amont 126 et de la soufflante 118. Des satellites 166 peuvent être implantés sur le carter amont 152 qui peut alors effectuer la fonction de porte-satellites 168.

Le présent agencement offre un rapport de réduction important entre le rotor central 130 et le rotor amont 126. En outre, ces rotors peuvent être contrarotatifs.

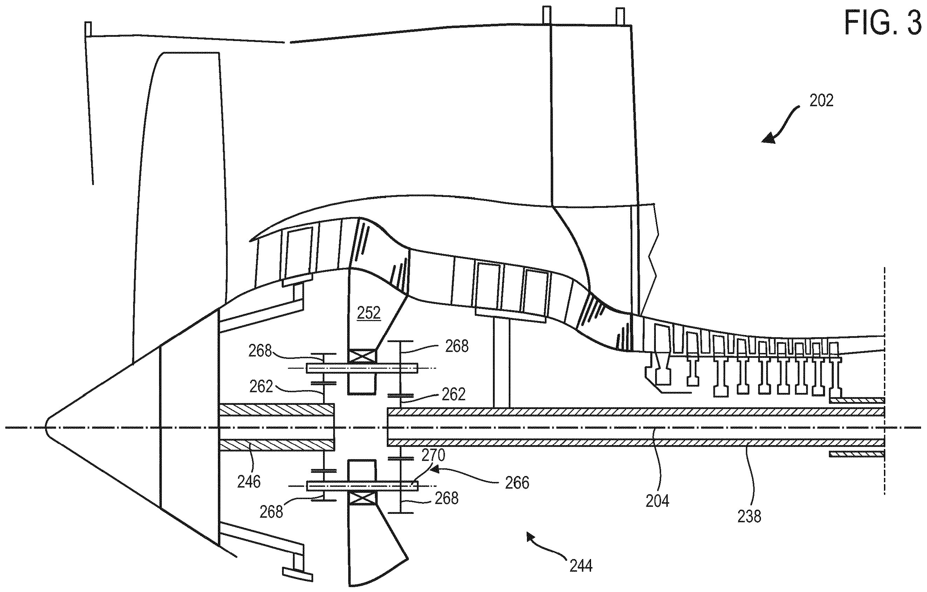

La figure 3 représente une turbomachine 202 selon un deuxième mode de réalisation de l'invention. Cette figure 3 reprend la numérotation des figures précédente, pour les éléments identiques ou similaires, la numération étant toutefois incrémentée de 200. Des numéros spécifiques sont utilisés pour les éléments spécifiques à ce mode de réalisation.

La turbomachine 202 selon le troisième mode de réalisation est sensiblement identique au premier mode de réalisation. Elle peut s'en distinguer via les rangées formées par ses aubages.

En outre, le réducteur 244 peut présenter un planétaire interne 262 sur l'arbre de sortie 246 qui présente un diamètre supérieur au planétaire interne 262 de l'arbre basse-pression 238. Chaque satellite 266 peut être à double pignon 268 reliés par une tige 270. Chaque tige 270 peut tourner par rapport au carter amont 252, et éventuellement le traverser. Par exemple, les pignons 268 en prise avec le planétaire interne 262 de l'arbre basse-pression 238 peuvent présenter un diamètre supérieur aux pignons 268 en prise avec le planétaire interne 262 sur l'arbre de sortie 246. En outre, le planétaire interne 262 de l'arbre basse-pression 238 peut comprendre un diamètre inférieur à celui du planétaire interne 262 sur l'arbre de sortie 246. Plusieurs satellites 266 peuvent être répartis autour de l'axe de rotation 204.

Grâce à cette construction, l'arbre de sortie 246 et l'arbre basse-pression 238 peuvent tourner dans le même sens, tout en offrant de larges possibilités quant au rapport de réduction. Ceci s'applique à tous les éléments solidaires des arbres en question.

Selon une variante du troisième mode de réalisation, l'arbre de sortie 246 peut être replacé par le planétaire externe du deuxième mode de réalisation. Cela permet d'avoir des arbres, respectivement des rotors, contrarotatifs.

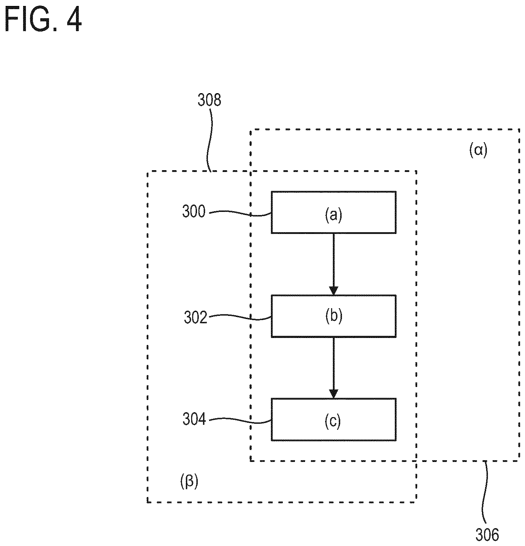

La figure 4 est un diagramme du procédé de compression d'un flux primaire selon l'invention.

La turbomachine peut correspondre à celle présentée en relation avec l'une des figures 1 à 3.

Le procédé peut comprendre les étapes suivantes :
(a) première compression 300 du flux axial par un compresseur amont avec un rotor amont, puis
(b) deuxième compression 302 du flux primaire par un compresseur central avec un rotor central, puis
(c) troisième compression 304 du flux primaire par un compresseur aval avec un rotor aval,

(α) entrainement en rotation 306 du rotor amont par le rotor central via un réducteur ;
(β) accélération 308 d'un flux entrant dans la turbomachine qui se partage entre le flux primaire et un flux secondaire, ladite étape étant optionnelle.

Pendant l'étape (α) entrainement 306, le flux primaire exerce sur le rotor amont et/ou la soufflante un premier couple résistant, et un deuxième couple résistant sur le rotor central qui est inférieur au premier couple résistant. A cette étape, la vitesse de rotation de la soufflante et du rotor amont la vitesse de rotation du rotor amont et de la soufflante est inférieure à la vitesse de rotation du rotor central et du rotor aval.

Les étapes (306-308) sont imbriquées ; elles peuvent être effectuées simultanément, en plus de pouvoir être effectuées pendant les étapes de compression.

## Revendications

1. Turbomachine axiale (2; 102; 202), tel un turboréacteur d'aéronef, la turbomachine (2 ; 102 ; 202) comprenant une soufflante (18 ; 118), et une veine primaire (42) traversant :
- un compresseur amont (24 ; 124) avec un rotor amont (26 ; 126) et des aubes statoriques (58 ; 158),
- un compresseur aval (32 ; 132) avec un rotor aval (34 ; 134) et des aubes statoriques (58 ; 158), et
- un compresseur central (28 ; 128) avec un rotor central (30 ; 130) disposé entre le rotor amont (26 ; 126) et le rotor aval (34 ; 134), et avec des aubes statoriques (58 ; 158) ;
la turbomachine axiale (2 ; 102 ; 202) comprenant en outre un réducteur (44 ; 144 ; 244) couplé au rotor amont (26 ; 126) et au rotor central (30 ; 130) de manière à réduire la vitesse de rotation du rotor amont (26 ; 126) par rapport à la vitesse de rotation du rotor central (30 ; 130),
le rotor amont (26 ; 126) étant solidaire de la soufflante (18 ; 118), et la turbomachine comprenant un bec de séparation (12) annulaire qui est axialement disposé entre la soufflante (18 ; 118) et le compresseur amont (24 ; 124),
**caractérisée en ce que** le compresseur amont (24 ; 124) comprend des jeux axiaux entre les aubes (60 ; 160) du rotor amont (26 ; 126) et les aubes statoriques (58 ; 158) du compresseur amont (26 ; 126), ces jeux axiaux étant supérieurs aux jeux axiaux du compresseur central (28 ; 128) entre les aubes (60 ; 160) du rotor central (30 ; 130) et les aubes statoriques (58 ; 158) du compresseur central (28 ; 128).

2. Turbomachine axiale (102 ; 202) selon la revendication 1, **caractérisée en ce que** le rotor amont (126) comprend une seule rangée annulaire d'aubes rotoriques (160), et le compresseur amont (24 ; 124) comprend un redresseur amont formé d'aubes statoriques (58 ; 158) en amont de ladite rangée annulaire d'aubes (160), et éventuellement un redresseur aval formé d'aubes statoriques (58 ; 158) en aval de ladite rangée annulaire (160).

3. Turbomachine axiale (2 ; 202) selon l'une des revendications 1 ou 2, **caractérisée en ce que** le rotor central (30) comprend au plus deux rangées annulaires d'aubes rotoriques (60), et le compresseur central (28 ; 128) comprend au plus deux redresseurs, préférentiellement au plus trois redresseurs.

4. Turbomachine axiale (2 ; 102 ; 202) selon l'une des revendications 1 à 3, **caractérisée en ce qu'**elle comprend un carter amont (152 ; 252) reliant le compresseur amont (24 ; 124) au compresseur central (28 ; 128), le carter amont (152 ; 252) étant traversé par la veine primaire (42) et le carter amont (152 ; 252) comprend une rangée annulaire de bras de carter (56 ; 156) et une rangée annulaire d'aubes axialement en regard du rotor amont (26 ; 126), et à distance axialement du rotor central (30 ; 130).

5. Turbomachine axiale (2 ; 102 ; 202) selon l'une des revendications 1 à 4, **caractérisée en ce qu'**elle comprend un carter aval (54) reliant le compresseur central (28 ; 128) au compresseur aval (32 ; 132), le carter aval (54) étant traversé par la veine primaire (42) et **en ce que** le carter aval (54) comprend une rangée annulaire de bras de carter (56 ; 156), une rangée annulaire d'aubes axialement en regard du rotor amont (26 ; 126), et éventuellement à distance axialement du rotor aval (34 ; 134).

6. Turbomachine axiale (2 ; 102 ; 202) selon l'une des revendications 1 à 5, **caractérisée en ce que** le compresseur central (28 ; 128) comprend une rangée annulaire d'aubes à calage variable, éventuellement au plus une rangée annulaire d'aubes à calage variable.

7. Turbomachine axiale (2 ; 102 ; 202) selon l'une des revendications 1 à 6, **caractérisée en ce qu'**au moins un ou chaque compresseur comprend une entrée annulaire avec une rangée annulaire d'aubes statoriques d'entrée (58 ; 158), et une sortie avec une rangée annulaire d'aubes statoriques de sortie entre lesquelles sont disposées les aubes du rotor (60 ; 160) correspondant.

8. Turbomachine axiale (2 ; 102 ; 202) selon l'une des revendications 1 à 7, **caractérisée en ce que** le compresseur amont (24 ; 124) et/ou le compresseur central (28 ; 128) comprend une rangée annulaire d'aubes statoriques (58 ; 158) en amont de chaque rangée annulaire d'aubes rotoriques (60 ; 160) du compresseur correspondant.

9. Turbomachine axiale (2 ; 102) selon l'une des revendications 1 à 8, **caractérisée en ce que** le réducteur (44 ; 144) comporte un planétaire interne (162) solidaire du rotor central (130), et un planétaire externe (164) solidaire du rotor amont (126).

10. Turbomachine axiale (2 ; 102 ; 202) selon l'une des revendications 1 à 9, **caractérisée en ce qu'**axialement au niveau du compresseur central (28 ; 128), la veine primaire (42) présente un rayon minimal compris entre le rayon minimal au niveau du compresseur amont (24 ; 124) et le rayon minimal au niveau du compresseur aval (32 ; 132).

11. Turbomachine axiale (2 ; 102 ; 202) selon l'une des revendications 1 à 10, **caractérisée en ce qu'**elle comprend une turbine basse-pression (40) et un arbre basse-pression (42) entraîné par la turbine basse-pression, ledit arbre basse-pression (42) étant solidaire du rotor central (30 ; 130) et du réducteur (44 ; 144 ; 244), et/ou une turbine haute-pression (36) et un arbre haute-pression (38) couplé à la turbine haute-pression et au rotor aval (34 ; 134).

12. Turboréacteur d'aéronef, notamment apte à ingérer un volatile, le turboréacteur comprenant une turbomachine axiale (2 ; 102 ; 202), **caractérisé en ce que** la turbomachine (2 ; 102 ; 202) est conforme à l'une des revendications 1 à 11, préférentiellement le turboréacteur comprend une veine secondaire (10) radialement à distance du compresseur central (28 ; 128).

13. Procédé de compression d'un flux annulaire (14) dans une turbomachine (2 ; 102 ; 202) avec une soufflante (18 ; 118) ;
le procédé comprenant les étapes suivantes :
(a) première compression (300) du flux primaire (14) par un compresseur amont (24 ; 124) avec un rotor amont (26 ; 126), puis
(b) deuxième compression (302) du flux primaire (14) par un compresseur central (28 ; 128) avec un rotor central (30 ; 130), puis
(c) troisième compression (304) du flux primaire (14) par un compresseur aval (32 ; 132) avec un rotor aval (34 ; 134),
**caractérisé en ce que** le procédé comprend en outre une étape
(α) entrainement en rotation (306) du rotor amont (26 ; 126) par le rotor central (30 ; 130) via un réducteur (44 ; 144 ; 244), la turbomachine (2 ; 102 ; 202) étant conforme à l'une des revendications 1 à 11.

14. Procédé selon la revendication 13, **caractérisé en ce que** lors de l'étape (α) entrainement (306), le flux annulaire exerce sur le rotor amont (26 ; 126) et la soufflante (18 ; 118) un premier couple résistant, et un deuxième couple résistant sur le rotor central (30 ; 130) qui est inférieur ou supérieur au premier couple résistant.

15. Procédé selon l'une des revendications 13 à 14, **caractérisé en ce que** lors de l'étape (α) entrainement (306), la vitesse de rotation de la soufflante (18 ; 118) et/ou du rotor amont (26 ; 126) est inférieure à la vitesse de rotation du rotor central (30 ; 130) et du rotor aval (34 ; 134).

## Patentansprüche

1. Eine axiale Turbomaschine (2; 102; 202), wie z.B. ein Flugzeug-Turbotriebwerk, wobei die Turbomaschine (2; 102; 202) aus einem Gebläse (18; 118) und einem Strömungsweg (42) besteht, der sich mit folgenden Elementen kreuzt:
- einen stromaufwärtigen Verdichter (24; 124) mit einem stromaufwärtigen Rotor (26; 126) und feststehenden Schaufeln (58; 158),
- einen stromabwärtigen Verdichter (32; 132) mit einem stromabwärtigen Rotor (34; 134) und feststehenden Schaufeln (58; 158), und
- einen zentralen Verdichter (28; 128) mit einem zentralen Rotor (30; 130), der zwischen dem stromaufwärtigen Rotor (26; 126) und dem stromabwärtigen Rotor (34; 134) angeordnet und mit feststehenden Schaufeln (58; 158) versehen ist;
die axiale Turbomaschine (2; 102; 202) umfasst außerdem
einen Abschwächer (44; 144; 244), der mit dem stromaufwärtigen Rotor (26; 126) und dem zentralen Rotor (30; 130) gekoppelt ist, um die Drehzahl des stromaufwärtigen Rotors (26; 126) im Verhältnis zur Drehzahl des zentralen Rotors (30; 130) zu verringern, wobei der stromaufwärtige Rotor (26; 126) fest mit dem Gebläse (18; 118) verbunden ist und die Turbomaschine eine ringförmige Verteilerdüse (12) enthält, die axial zwischen dem Gebläse (18; 118) und dem stromaufwärtigen Verdichter (24; 124) angeordnet ist, **dadurch gekennzeichnet, dass** der stromaufwärtige Verdichter (24; 124) ein axiales Spiel zwischen den Schaufeln (60; 160) des stromaufwärtigen Rotors (26; 126) und den feststehenden Schaufeln (58; 158) des stromaufwärtigen Verdichters (26; 126) aufweist, wobei dieses axiale Spiel größer ist als das axiale Spiel des zentralen Verdichters (28; 128) zwischen den Schaufeln (60; 160) des zentralen Rotors (30; 130) und den feststehenden Schaufeln (58; 158) des zentralen Verdichters (28; 128).

2. Eine axiale Turbomaschine (102; 202) nach Anspruch 1, **dadurch gekennzeichnet, dass** der stromaufwärtige Rotor (126) eine einzige ringförmige Anordnung von Rotorschaufeln (160) umfasst und der stromaufwärtige Verdichter (24; 124) einen stromaufwärtigen Gleichrichter umfasst, der aus feststehenden Schaufeln (58; 158) stromaufwärts der ringförmigen Anordnung von Schaufeln (160) gebildet ist, und möglicherweise einen stromabwärtigen Gleichrichter, der aus feststehenden Schaufeln (58; 158) stromabwärts der genannten ringförmigen Anordnung (160) gebildet ist.

3. Eine axiale Turbomaschine (2; 202) nach einem der Ansprüche 1 oder 2, **dadurch gekennzeichnet, dass** der zentrale Rotor (30) höchstens zwei ringförmige Anordnungen von Rotorschaufeln (60) umfasst und der zentrale Verdichter (28; 128) höchstens zwei Gleichrichter, vorzugsweise höchstens drei Gleichrichter, umfasst.

4. Eine axiale Turbomaschine (2; 102; 202) nach einem der Ansprüche 1 bis 3, **dadurch gekennzeichnet, dass** sie ein stromaufwärtiges Gehäuse (152; 252) enthält, das den stromaufwärtigen Verdichter (24; 124) mit dem zentralen Verdichter (28; 128) verbindet, wobei das stromaufwärtige Gehäuse (152; 252) von dem Hauptströmungsweg (42) durchquert wird und das stromaufwärtige Gehäuse (152; 252) eine ringförmige Anordnung von Gehäusearmen (56; 156) und eine ringförmige Anordnung von Schaufeln umfasst, die axial von dem stromaufwärtigen Rotor (26; 126) und axial von dem zentralen Rotor (30; 130) entfernt sind.

5. Eine axiale Turbomaschine (2; 102; 202) nach einem der Ansprüche 1 bis 4, **dadurch gekennzeichnet, dass** sie ein stromabwärtiges Gehäuse (54) enthält, das den zentralen Verdichter (28; 128) mit dem stromabwärtigen Verdichter (32; 132) verbindet, wobei das stromabwärtige Gehäuse (54) von dem Hauptströmungsweg (42) durchquert wird, und dass das stromabwärtige Gehäuse (54) eine ringförmige Anordnung von Gehäusearmen (56; 156), eine ringförmige Anordnung von Schaufeln, die axial von dem stromaufwärtigen Rotor (26; 126) entfernt ist, und möglicherweise axial von dem stromabwärtigen Rotor (34; 134) entfernt ist, umfasst.

6. Eine axiale Turbomaschine (2; 102; 202) nach einem der Ansprüche 1 bis 5, **dadurch gekennzeichnet, dass** der zentrale Verdichter (28; 128) eine ringförmige Anordnung von Schaufeln mit variabler Steigung umfasst, möglicherweise höchstens eine ringförmige Anordnung von Schaufeln mit variabler Steigung.

7. Eine axiale Turbomaschine (2; 102; 202) nach einem der Ansprüche 1 bis 6, **dadurch gekennzeichnet, dass** mindestens ein oder jeder Verdichter einen ringförmigen Einlass mit einer ringförmigen Anordnung von feststehenden Einlassschaufeln (58; 158) und einen Auslass mit einer ringförmigen Anordnung von feststehenden Auslassschaufeln, zwischen denen die entsprechenden Rotorschaufeln (60; 160) angeordnet sind, umfasst.

8. Eine axiale Turbomaschine (2; 102; 202) nach einem der Ansprüche 1 bis 7, **dadurch gekennzeichnet, dass** der stromaufwärtige Verdichter (24; 124) und/oder der zentrale Verdichter (28; 128) eine ringförmige Anordnung von feststehenden Schaufeln (58; 158) stromaufwärts von jeder ringförmigen Anordnung von Rotorschaufeln (60; 160) des entsprechenden Verdichters umfasst.

9. Eine axiale Turbomaschine (2; 102) nach einem der Ansprüche 1 bis 8, **dadurch gekennzeichnet, dass** der Abschwächer (44; 144) ein mit dem zentralen Rotor (130) verbundenes Innenplanetengetriebe (162) und ein mit dem stromaufwärtigen Rotor (126) verbundenes Außenplanetengetriebe (164) enthält.

10. Eine axiale Turbomaschine (2; 102; 202) nach einem der Ansprüche 1 bis 9, **dadurch gekennzeichnet, dass** der Hauptströmungsweg (42) axial auf der Höhe des zentralen Verdichters (28; 128) einen minimalen Radius zwischen dem minimalen Radius auf der Höhe des stromaufwärtigen Verdichters (24; 124) und dem minimalen Radius auf der Höhe des stromabwärtigen Verdichters (32; 132) aufweist.

11. Eine axiale Turbomaschine (2; 102; 202) nach einem der Ansprüche 1 bis 10, **dadurch gekennzeichnet, dass** sie aus einer Niederdruckturbine (40) und einer Niederdruckwelle (42), die von der Niederdruckturbine angetrieben wird, wobei die Niederdruckwelle (42) mit dem zentralen Rotor (30; 130) und dem Abschwächer (44; 144; 244) fest verbunden ist, und/oder einer Hochdruckturbine (36) und einer Hochdruckwelle (38), die mit der Hochdruckturbine und dem stromabwärtigen Rotor (34; 134) gekoppelt ist, besteht.

12. Ein Flugzeug-Turbotriebwerk, das im Grunde in der Lage ist, einen Vogel anzusaugen, wobei das Turbotriebwerk eine axiale Turbomaschine (2; 102; 202) umfasst, **dadurch gekennzeichnet, dass** die Turbomaschine (2; 102; 202) einem der Ansprüche 1 bis 11 entspricht, wobei das Turbotriebwerk vorzugsweise einen sekundären Strömungsweg (10) umfasst, der radial vom zentralen Verdichter (28; 128) entfernt ist.

13. Ein Verfahren zur Verdichtung einer ringförmigen Strömung (14) in einer Turbomaschine (2; 102; 202) mit einem Gebläse (18; 118);
wobei das Verfahren die folgenden Schritte umfasst:
(a) eine erste Verdichtung (300) der Hauptströmung (14) durch einen stromaufwärtigen Verdichter (24; 124) mit einem stromaufwärtigen Rotor (26; 126), dann
(b) eine zweite Verdichtung (302) des Hauptstroms (14) durch einen zentralen Verdichter (28; 128) mit einem zentralen Rotor (30; 130), dann
(c) eine dritte Verdichtung (304) des Hauptstroms (14) durch einen stromabwärtigen Verdichter (32; 132) mit einem stromabwärtigen Rotor (34; 134),
**dadurch gekennzeichnet, dass** das Verfahren außerdem einen Schritt
(a) des Drehantriebs (306) des zentralen Rotors (30; 130) durch den stromaufwärtigen Rotor (26; 126) mit Hilfe eines Abschwächers (44; 144; 244) umfasst, wobei die Turbomaschine (2; 102; 202) einem der Ansprüche 1 bis 11 entspricht.

14. Ein Verfahren nach Anspruch 13, **dadurch gekennzeichnet, dass** während des Antriebsschritts (306) (α) die Ringströmung auf den stromaufwärtigen Rotor (26; 126) und das Gebläse (18; 118) ein erstes Widerstandsmoment und auf den zentralen Rotor (30; 130) ein zweites Widerstandsmoment ausübt, das niedriger oder höher als das erste Widerstandsmoment ist.

15. Ein Verfahren nach einem der Ansprüche 13 bis 14, **dadurch gekennzeichnet, dass** während des Antriebsschritts (306) die Drehzahl des Gebläses (18; 118) und/oder des stromaufwärtigen Rotors (26; 126) niedriger ist als die Drehzahl des zentralen Rotors (30; 130) und des stromabwärtigen Rotors (34; 134).

## Claims

1. An axial turbomachine (2; 102; 202), such as an aircraft turbojet, the turbomachine (2; 102; 202) comprising a fan (18; 118), and a flow path (42), crossing:
- an upstream compressor (24; 124) with an upstream rotor (26; 126) and stator vanes (58; 158),
- a downstream compressor (32; 132) with a downstream rotor (34; 134) and stator vanes (58; 158), and
- a central compressor (28; 128) with a central rotor (30; 130) positioned between the upstream rotor (26; 126) and the downstream rotor (34; 134), and fitted with stator vanes (58; 158);
the axial turbomachine (2; 102; 202) further comprising
a reducer (44; 144; 244) coupled to the upstream rotor (26; 126) and to the central rotor (30; 130) so as to reduce the rotation speed of the upstream rotor (26; 126) in relation to the rotation speed of the central rotor (30; 130), the upstream rotor (26; 126) being secured to the fan (18; 118), and the turbomachine comprising an annular splitter nozzle (12) axially positioned between the fan (18; 118) and the upstream compressor (24; 124),
**characterized in that** the upstream compressor (24; 124) comprises an axial play between the blades (60; 160) of the upstream rotor (26; 126) and the stator vanes (58; 158) of the upstream compressor (26; 126), such axial play being larger than the axial play of the central compressor (28; 128) between the blades (60; 160) of the central rotor (30; 130) and the stator vanes (58; 158) of the central compressor (28; 128).

2. An axial turbomachine (102; 202) according to claim 1, **characterized in that** the upstream rotor (126) comprises a single annular row of rotor blades (160), and the upstream compressor (24; 124) comprises an upstream rectifier formed of stator vanes (58; 158) upstream of the said annular row of blades (160), and possibly a downstream rectifier formed of stator vanes (58; 158) downstream of the said annular row (160).

3. An axial turbomachine (2; 202) according to one of claims 1 or 2, **characterized in that** the central rotor (30) comprises at most two annular rows of rotor blades (60), and the central compressor (28; 128) comprises at most two rectifiers, preferably at most three rectifiers.

4. An axial turbomachine (2; 102; 202) according to one of claims 1 to 3, **characterized in that** it comprises an upstream casing (152; 252) connecting the upstream compressor (24; 124) to the central compressor (28; 128), the upstream casing (152; 252) being crossed by the primary flow path (42) and the upstream casing (152; 252) comprises an annular row of casing arms (56; 156) and an annular row of blades axially spaced from the upstream rotor (26; 126), and axially spaced from the central rotor (30; 130).

5. An axial turbomachine (2; 102; 202) according to one of claims 1 to 4, **characterized in that** it comprises a downstream casing (54) connecting the central compressor (28; 128) to the downstream compressor (32; 132), the downstream casing (54) being crossed by the primary flow path (42) and **in that** the downstream casing (54) comprises an annular row of casing arms (56; 156), an annular row of blades axially spaced from the upstream rotor (26; 126), and possibly axially spaced from the downstream rotor (34; 134).

6. An axial turbomachine (2; 102; 202) according to one of claims 1 to 5, **characterized in that** the central compressor (28; 128) comprises an annular row of variable stator vanes, possibly at most one annular row of variable stator vanes.

7. An axial turbomachine (2; 102; 202) according to one of claims 1 to 6, **characterized in that** at least one or each compressor comprises an annular inlet with an annular row of inlet stator vanes (58; 158), and an outlet with an annular row of outlet stator vanes between which the corresponding rotor blades (60; 160) are positioned.

8. An axial turbomachine (2; 102; 202) according to one of claims 1 to 7, **characterized in that** the upstream compressor (24; 124) and/or the central compressor (28; 128) comprises an annular row of stator vanes (58; 158) upstream of each annular row of rotor blades (60; 160) of the corresponding compressor.

9. An axial turbomachine (2; 102) according to one of claims 1 to 8, **characterized in that** the reducer (44; 144) contains an internal planetary gear (162) secured to the central rotor (130), and an external planetary gear (164) secured to the upstream rotor (126).

10. An axial turbomachine (2; 102; 202) according to one of claims 1 to 9, **characterized in that** axially at the level of the central compressor (28; 128), the primary flow path (42) has a minimum radius between the minimum radius at the level of the upstream compressor (24; 124) and the minimum radius at the level of the downstream compressor (32; 132).

11. An axial turbomachine (2; 102; 202) according to one of claims 1 to 10, **characterized in that** it consists of a low-pressure turbine (40) and a low-pressure shaft (42) driven by the low-pressure turbine, the said low-pressure shaft (42) being secured to the central rotor (30; 130) and the reducer (44; 144; 244), and/or a high-pressure turbine (36) and a high-pressure shaft (38) coupled to the high-pressure turbine and to the downstream rotor (34; 134).

12. An aircraft turbojet, optionally capable of ingesting a bird, the turbojet comprising an axial turbomachine (2; 102; 202), **characterized in that** the turbomachine (2; 102; 202) complies with one of claims 1 to 11, preferably the turbojet engine comprises a secondary flow path (10) radially spaced from the central compressor (28; 128).

13. Method for compressing an annular flow (14) in a turbomachine (2; 102; 202) with a fan (18; 118);
the method comprising the following steps:
(a) a first compression (300) of the primary flow (14) by an upstream compressor (24; 124) with an upstream rotor (26; 126), then
(b) a second compression (302) of the primary flow (14) by a central compressor (28; 128) with a central rotor (30; 130), then
(c) a third compression (304) of the primary flow (14) by a downstream compressor (32; 132) with a downstream rotor (34; 134),
**characterized in that** the method further comprises a step
(α) driving (306) the upstream rotor (26; 126) by means of a reducer (44; 144; 244), the turbomachine (2; 102; 202) complying with one of claims 1 to 11.

14. Method according to claim 13, **characterized in that** during the driving (306) step (α), the annular flow applies on the upstream rotor (26; 126) and the fan (18; 118) a first resistance torque, and a second resistance torque on the central rotor (30; 130) which is lower or higher than the first resistance torque.

15. Method according to one of claims 13 to 14, **characterized in that** during the driving (306) step (α), the rotation speed of the fan (18; 118) and/or of the upstream rotor (26; 126) is lower than the rotation speed of the central rotor (30; 130) and of the downstream rotor (34; 134).
